# EUROPÄISCHE PATENTSCHRIFT

(11) **EP 0 504 442 B1**
(45) Veröffentlichungstag und Bekanntmachung des Hinweises auf die Patenterteilung: **03.07.1996**
(21) Anmeldenummer: 91104155.6
(22) Anmeldetag: 18.03.1991
(51) Int. Cl.: B23Q 7/18, B27C 1/12, B23Q 7/06

(54) **Vorrichtung zum Zuführen von Werkstücken zu einer Bearbeitungsmaschine**
Device for feeding workpieces to a production machine
Dispositif pour l'alimentation des pièces vers une machine de production

(43) Veröffentlichungstag der Anmeldung: 23.09.1992
(73) Patentinhaber: HOMAG MASCHINENBAU AG, D-72296 Schopfloch (DE)
(72) Erfinder: Kalmbach, Kurt, W-7291 Glatten (DE); Frey, Karl, W-7294 Schopfloch (DE); Rathgeber, Peter, W-7295 Dornstetten (DE)
(74) Vertreter: Kohlmann, Karl Friedrich, Dipl.-Ing.

(56) Entgegenhaltungen:
- DE-A- 2 504 584
- DE-A- 3 447 703
- DE-A- 3 637 713
- DE-A- 3 914 640
- DE-U- 8 403 857
- GB-A- 1 150 257
- US-A- 4 398 629

## Beschreibung

Die vorliegende Erfindung betrifft eine Vorrichtung zum Zuführen von Werkstücken zu einer kontinuierlich im Durchlauf arbeitenden Bearbeitungsmaschine, insbesondere Kantenbearbeitungsmaschine, mit einer Antriebsmittel aufweisenden Fördereinrichtung, mit der die Werkstücke über eine Förderstrecke zu einem Hauptförderer der Bearbeitungsmaschine bewegbar sind, mit Ausrichtmitteln, über die die Werkstücke bei ihrem Weg über die Förderstrecke bis zur Übergabe winkelgerecht und hinsichtlich ihrer Seitenlage präzise ausgerichtet werden, wobei die Ausrichtmittel von mindestens zwei Anschlägen gebildet sind, die zur Anlage an der in Durchlaufrichtung vorderen oder hinteren Kante des jeweiligen Werkstückes eingerichtet sind, und am Werkstück angreifende zusätzliche Elemente vorgesehen sind, die die Werkstücke während des Fördervorganges nachgiebig an den Anschlägen in Anlage halten.

Bei doppelseitig arbeitenden Kantenbearbeitungsmaschinen sind die beiden nebeneinanderliegenden und synchron zueinander angetriebenen Hauptförderer jeweils mit einer identischen Anzahl von im gleichen Abstand zueinander angeordneten, ein- und ausfahrbaren Anschlägen ausgestattet. Die Anordnung ist dabei derart getroffen, daß die jeweils einander gegenüberliegenden Anschläge der nebeneinanderliegenden Hauptförderer mit ihren Anschlagflächen präzise in einer liegen. Die jeweils einander gegenüberliegenden Anschläge dienen somit als Ausrichtmittel, über die die Werkstücke bei ihrem Weg entlang der Bearbeitungsaggregate in der Bearbeitungsmaschine präzise ausgerichtet werden.

Bei einseitig arbeitenden Kantenbearbeitungsmaschinen wiederum ist dem Hauptförderer eine Fördereinrichtung vorgeschaltet, mit der die Werkstücke bis zur Übergabe an den Hauptförderer der Kantenbearbeitungsmaschine hinsichtlich ihrer Seitenlage ausgerichtet werden. Diese Fördereinrichtung besteht aus zwei im Abstand und parallel nebeneinander angeordneten Einschubbändern, die synchron zum Hauptförderer und in dessen Arbeitsrichtung angetrieben und mit einer jeweils identischen Anzahl von im gleichen Abstand zueinander angeordneten aus- und einfahrbaren Anschlägen ausgestattet sind. Die beiden Einschubbänder werden dabei synchron zueinander derart angetrieben, daß die jeweils einander gegenüberliegenden Anschläge der nebeneinander liegenden Bänder mit ihren Anschlagflächen präzise in einer senkrecht zur Förderrichtung verlaufenden Ebene liegen. Die ausfahrbaren Anschläge dienen einerseits als Fördereinrichtung, mit der die Werkstücke bis zur Übergabe an den Hauptförderer bewegt werden, und andererseits als Ausrichtmittel, über die die Werkstücke bei ihrem Weg über die Förderstrecke bis zur Übergabe winkelgerecht ausgerichtet werden. Aufgrund der vorgeschalteten, anschlagbestückten Fördereinrichtung können bei derartigen, einseitig arbeitenden Kantenmaschinen die Anschläge an dem Hauptförderer entfallen. Zum Ausrichten hinsichtlich der Seitenlage wiederum sind bei dieser bekannten Vorrichtung schräggestellte, auf die Oberfläche der Werkstücke einwirkende Rollen vorgesehen, über die die Werkstücke mit der für die Bearbeitung vorgesehenen Kante an ein im Randbereich der Förderstrecke angeordnetes und parallel zur Förderrichtung präzise ausgerichtetes Anschlaglineal zur Anlage gebracht werden.

Vorrichtungen dieser letztgenannten bekannten Art ermöglichen eine schnelle, vollautomatische Zuführung der Werkstücke bei ausreichender Ausrichtung hinsichtlich Winkel- und Seitenlage. Zuführ- und Ausrichtfehler, wie sie bei manueller Beschickung unumgänglich sind, werden damit reduziert. Allerdings ist die Taktfolge der Zuführung stets durch den Abstand (in Förderrichtung betrachtet) der Anschläge festgelegt, wie dies auch bei doppelseitig arbeitenden Kantenbearbeitungsmaschinen mit anschlagbestücktem Hauptförderer der Fall ist.

Zuführ- und insbesondere Ausrichtfehler können bei derartigen Vorrichtungen nur dann reduziert oder ganz vermieden werden, wenn die Werkstücke zumindest im letzten Teil der Förderstrecke zuverlässig und sicher in Anlage an den Anschlägen gehalten werden. Um dies zu gewährleisten, ist es bekannt (vgl. beispielsweise GB-A-11 50 257), zusätzliche Elemente vorzusehen, die an den Werkstücken angreifen und bewirken, daß diese nachgiebig an den Anschlägen in Anlage gehalten werden. Im Falle der bekannten Konstruktion werden diese zusätzlichen Elemente von Bandförderern gebildet, die mit einer höheren (oder niedrigeren) Geschwindigkeit als die Anschläge laufen und an den Werkstücken auf deren Ober- und Unterseite angreifen. Die Werkstücke werden auf diese Weise mit ihrer Vorderkante (oder ihrer Hinterkante) an die Anschläge herangeführt und an den Anschlägen im weiteren Verlauf bis zur Übergabe an den Hauptförderer in Anlage gehalten.

Nun kommt es bei der sogenannten kommissionsweisen Fertigung, d.h. bei der aufeinanderfolgenden Bearbeitung von Werkstücken unterschiedlicher zu bearbeitender Seitenlänge und bei der Bearbeitung von Werkstücken bestimmter Abmessungen, z.B. bei zu bearbeitenden Seitenlängen, die etwa dem Abstand der Anschläge oder einem Vielfachen davon entsprechen, aufgrund der festliegenden Anschlagfolge zwangsläufig stetig zu großen Lücken zwischen den Werkstücken. Große Lücken zwischen den zu bearbeitenden Werkstücken führen jedoch zu einer ungenügenden Ausnützung der Kapazität der Bearbeitungsmaschine.

Aufgabe der vorliegenden Erfindung ist es daher, eine Vorrichtung der gattungsgemäßen Art derart weiterzubilden, daß eine bessere Ausnützung der Kapazität sowohl bei einseitig als auch bei doppelseitig arbeitenden Bearbeitungsmaschinen möglich ist.

Diese Aufgabe wird erfindungsgemäß dadurch gelöst, daß die Anschläge über die Antriebsmittel mit einer für jedes Werkstück individuellen einstellbaren, im Bedarfsfalle Beschleunigungs- und/oder Verzögerungsvorgänge umfassenden Geschwindigkeit entlang der Förderstrecke bewegbar sind.

Der Erfindung liegt der Gedanke zugrunde, die starre und festliegende Anschlagfolge der Zuführvorrichtung durch ein flexibles und dynamisches System zu ersetzen. Mit anderen Worten: Erfindungsgemäß wird die bei bekannten Vorrichtungen mit konstanter Geschwindigkeit arbeitende, anschlaggebundene Fördereinrichtung durch eine von der Geschwindigkeit des Hauptförderers der Bearbeitungsmaschine unabhängige, flexible und dynamisch arbeitende Fördereinrichtung ersetzt, die selbst bei der Beschickung mit aufeinanderfolgenden Werkstücken stark unterschiedlicher, zu bearbeitender Seitenlänge gleiche, optimal an die nachfolgenden Bearbeitungsvorgänge angepaßte Lücken zwischen den aufeinanderfolgenden Werkstücken bildet. Erfindungsgemäß sind die Antriebsmittel dabei derart gestaltet, daß die Anschläge und damit die Werkstücke im Bedarfsfalle entlang der Förderstrecke unter Berücksichtigung ihrer zu bearbeitenden Seitenlänge derart beschleunigt oder verzögert werden können, daß zum Zeitpunkt der Übergabe zwischen den Werkstücken stets gleiche optimale Lücken gebildet sind.

Aufgrund der optimalen Lückenbildung ergibt sich beim Betrieb der Bearbeitungsmaschine stets eine optimale Maschinenausnutzung und in deren Folge eine hohe Arbeitsleistung. Die Vorrichtung zum Zuführen der Werkstücke ist dabei einfach aufgebaut und leicht zu bedienen. Sie ist wartungs- und servicefreundlich und ihre Baukosten sind vergleichsweise gering. Sie ist auch bei doppelseitig arbeitenden Bearbeitungsmaschinen, insbesondere doppelseitigen Kantenbearbeitungsmaschinen einsetzbar, wodurch die Anordnung von ein- und ausfahrbaren Anschlägen an den Hauptförderern entfallen und der damit verbundene konstruktive Aufwand eingespart werden kann.

Für die unabhängige Arbeitsweise der Antriebsmittel ist es vorteilhaft, einen vom Antrieb des Hauptförderers unabhängigen Antrieb zu wählen. Den jeweiligen Erfordernisen entsprechend kann der Antrieb ein elektromotorischer oder gegebenenfalls ein pneumatischer Antrieb sein.

Vorteilhaft ist es, auch bei der erfindungsgemäßen Konstruktion, ansich bekannte, am Werkstück angreifende zusätzliche Elemente vorzusehen, die die Werkstücke in bekannter Weise während des Fördervorganges nachgiebig an den Anschlägen in Anlage halten. In einem solchen Falle ist selbst bei hochdynamischem Betrieb, d.h. bei sehr schnellem Beschleunigen oder Verzögern der Werkstücke gewährleistet, daß die Werkstücke an den Anschlägen in Anlage gehalten werden, und damit über die gesamte Förderstrecke hin winkelgerecht ausgerichtet sind.

Diese am Werkstück angreifenden zusätzlichen Elemente können in verschiedenster Weise ausgestattet sein. Sie können in bekannter Weise von jeweils auf der Unterseite und/oder der Oberseite der Werkstücke angreifenden Bändern oder Rollen gebildet sein. Wesentlich ist lediglich, daß die zusätzlichen Elemente eine in Richtung auf die Anschläge gerichtete Kraft auf die Werkstücke ausüben und auf diese Weise das Werkstück bis zur Übergabe an den Hauptförderer selbst bei abrupten Beschleunigungs- oder Verzögerungsvorgängen stabilisieren.

Die zusätzlichen Elemente können gegebenenfalls auch auf der den Anschlägen entgegengesetzten Werkstückkante auf das Werkstück einwirken.

Zur Ausrichtung der Werkstücke hinsichtlich der Seitenlage ist es vorteilhaft, ebenfalls auf bekannte Anordnungen zurückzugreifen. Eine derartige bekannte Anordnung, die in Kombination mit der erfindungsgemäßen Ausbildung bei einfachem Aufbau gute Ausrichtergebnisse erbringt, besteht aus einem im Randbereich der Förderstrecke parallel zur Förderrichtung ausgerichteten Anschlaglineal sowie quer zur Förderrichtung wirksame Ausrichtmitteln, die die Werkstücke mit der für die Bearbeitung vorgesehenen Kante in Richtung des Anschlaglineals bewegen und an diesem nachgiebig in Anlage halten. Besonders vorteilhafte, quer zur Förderrichtung wirksame Ausrichtmittel sind schräggestellte Rollen oder Bänder, wie sie bei Vorrichtungen der bekannten Art bereits im Einsatz sind.

Bei einem bevorzugten Ausführungsbeispiel sind die Anschläge auf einem sich quer zur Förderrichtung und unterhalb der Förderstrecke erstreckenden Grundträger befestigt. Dieser Grundträger ist auf einer Führung hin- und herverfahrbar gelagert. Grundsätzlich kann die Führung in verschiedenster Weise ausgebildet sein. Vorteilhaft ist es, den Grundträger auf einer Führung zu lagern, die mindestens zwei im Abstand und parallel zueinander in Förderrichtung verlaufende Geradführungen aufweist.

Im Bedarfsfall kann der Grundträger gemäß einer vorteilhaften Weiterbildung mit einer sogenannten Synchronlaufeinrichtung ausgestattet sein.

Eine technisch besonders einfach aufgebaute und betriebssicher arbeitende Synchronlaufeinrichtung besteht aus zwei im Abstand zueinander angeordneten, vorzugsweise an den Geradführungen befestigten Zahnstangen, in die jeweils Zahnräder eingreifen, welche über eine an dem Grundträger gelagerte Verbindungswelle drehfest miteinander gekoppelt sind.

Im Betrieb ist der Grundträger über den Antrieb entlang den Geradführungen hin- und herverfahrbar. Vorteilhaft ist es, den Grundträger über einen Zahnriementrieb mit dem Antrieb zu koppeln. Bei einer bevorzugten Ausführungsform sind die Anschläge für die Überlauf- bzw. Rücklaufphase unter die Auflageebene der Werkstücke absenkbar.

Grundsätzlich kann die Auflageebene für die Werkstücke in verschiedenster Weise gebildet sein. Eine besonders schonende Behandlung der Werkstücke wird gewährleistet, wenn die Auflageebene für die Werkstücke von an der Unterseite der Werkstücke angreifenden Bändern oder Rollen gebildet ist.

Die Betätigung der Anschläge kann in verschiedenster Weise erfolgen. Bewährt haben sich auf diesem Fachgebiet zu diesem Zweck bereits Anordnungen, bei denen die Anschläge über Pneumatikzylinder ausfahrbar bzw. absenkbar sind.

Eine besonders vorteilhafte Arbeitsweise der erfindungsgemäßen Vorrichtung ergibt sich, wenn die Zufuhr der Werkstücke auf der Einlaufseite der Vorrichtung gesteuert wird. Vorteilhaft ist es deshalb, wenn auf der der Bearbeitungsmaschine gegenüberliegenden Einlaufseite der Vorrichtung ein Halteanschlag für die Werkstücke vorgesehen ist. Dieser Halteanschlag kann in verschiedenster Weise ausgebildet sein. Vorteilhaft ist es, wenn der Halteanschlag als Anschlag lineal ausgebildet ist, da dadurch Werkstücke jeder Länge sicher gestoppt, und darüber hinaus bereits vor dem Einlaufen in die Vorrichtung vorausgerichtet werden.

Erfindungsgemäß wird durch den Halteanschlag die Lückenbildung vorbereitet. Bei optimaler Zufuhr der Werkstücke zu der Vorrichtung treten in der Vorrichtung lediglich die Ausrichtmittel zum winkelgerechten Ausrichten der Werkstücke in Funktion. In der Praxis erfolgt allerdings die "Feineinstellung" der Lücke über die Fördereinrichtung, welche die Werkstücke bis zum Zeitpunkt der Übergabe an den Hauptförderer auf den für die Arbeitsweise des Hauptförderers optimalen Abstand zur Hinterkante des vorauslaufenden Werkstückes bringt.

Mit anderen Worten: Während der Halteanschlag die "Grobeinstellung" der Lücke vornimmt, erfolgt durch die Fördereinrichtung die Feineinstellung der Lücke und die präzise Ausrichtung der Werkstücke.

Grundsätzlich kann der Halteanschlag in verschiedenster Weise ausgebildet sein. Vorteilhaft ist es, wenn der Halteanschlag aus einer die Einlaufbewegung des Werkstückes stoppenden Sperrstellung in eine den Einlauf der Werkstücke freigebende abgesenkte Stellung verfahrbar ist.

Im folgenden ist zur weiteren Erläuterung zum besseren Verständnis der Erfindung ein bevorzugtes Ausführungsbeispiel unter Bezugnahme auf die beigefügten Figuren näher beschrieben und erläutert.
Figur 1 zeigt schematisch in einer Seitenansicht die wesentlichen Elemente einer erfindungsgemäßen Vorrichtung zum Zuführen von Werkstücken, sowie deren Zuordnung zu einer nachgeschalteten Bearbeitungsmaschine,
Figur 2 zeigt eine vergrößerte Darstellung eines Teiles der Figur 1, und
Figur 3 zeigt einen Schnitt in der Ebene III-III der Figur 2.

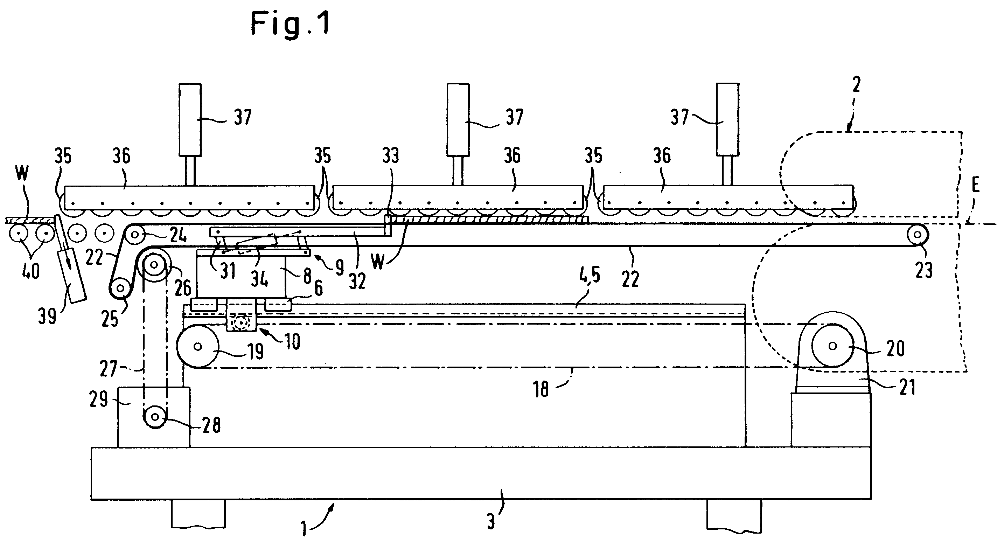

Wie bereits erwähnt, stellt die erfindungsgemäße Vorrichtung 1 zum Zuführen von Werkstücken W eine von der nachgeschalteten, kontinuierlich im Durchlauf arbeitenden Bearbeitungsmaschine 2 vollkommen unabhängige Maschine dar. Die nachgeschaltete Bearbeitungsmaschine 2, im vorliegenden Beispiel eine Kantenbearbeitungsmaschine, ist daher in Figur 1 auch nur mit gestrichelten Linien angedeutet. Zur Lösung der gestellten Aufgabe, und damit zur optimalen Lückenbildung zwischen den aufeinanderfolgenden Werkstücken W ist allerdings die Arbeitsweise der erfindungsgemäßen Vorrichtung auf die Arbeitsweise des nicht dargestellten Hauptförderers der Bearbeitungsmaschine 2 genau abgestimmt.

Die erfindungsgemäße Vorrichtung 1 umfaßt ein Maschinengestell 3, auf dem Geradführungen 4 und 5 aufgebaut sind. Die Geradführungen 4 und 5 verlaufen parallel zueinander und sind präzise parallel zur Förderrichtung des nicht dargestellten Hauptförderers der Bearbeitungsmaschine 2 ausgerichtet.

Auf den Geradführungen 4 und 5 ist über Führungswagen 6 und 7 ein Grundträger 8 hin- und herverfahrbar gelagert, der sich quer zur Förderrichtung erstreckt und auf seiner Oberseite eine Anschlaganordnung 9 trägt.

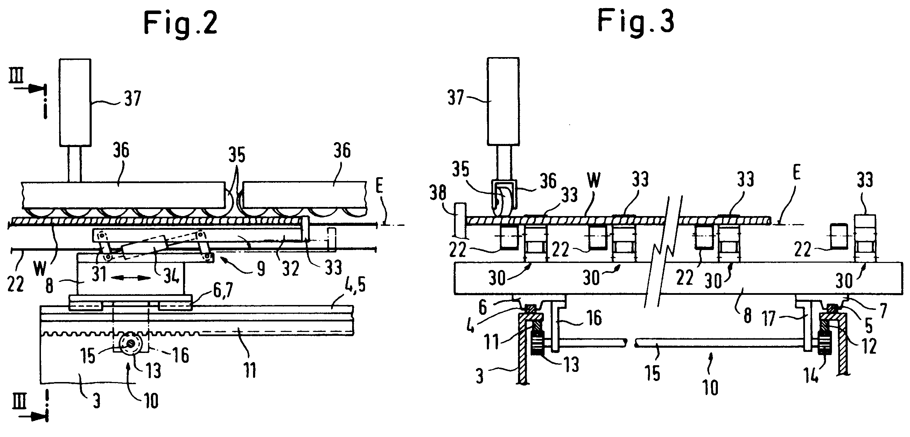

Der Grundträger 8 ist mit einer Synchronlaufeinrichtung 10 ausgestattet, die in den Figuren 2 und 3 näher dargestellt ist. Diese Synchronlaufeinrichtung besteht aus jeweils an den Geradführungen 4 und 5 befestigten Zahnstangen 11 und 12, in die Zahnräder 13 und 14 eingreifen, welche über eine Verbindungswelle 15 drehfest miteinander verbunden sind. Die Verbindungswelle 15 ist über Lagerböcke 16, 17 an der Unterseite des Grundträgers 8 gelagert.

An dem Grundträger 8 greift ein endloser Zahnriemen 18 an, der über ein Maschinengestell 3 befestigtes Umlenkzahnrad 19 und ein Antriebszahnrad 20 parallel zu den Geradführungen 4 und 5, und damit parallel zur Förderrichtung geführt ist. Das Antriebszahnrad 20 wiederum ist über ein Getriebe mit einem Antriebsmotor 21 gekoppelt, der seinerseits auf dem Maschinengestell 3 befestigt ist.

Über den Antriebsmotor 21, dessen Drehrichtung umkehrbar ist, ist somit der Grundträger 8, und damit die auf seiner Oberseite angeordnete Anschlaganordnung 9 auf den Geradführungen 4 und 5 parallel zur Förderrichtung der Vorrichtung hin- und herverfahrbar.

Wie aus Figur 1 hervorgeht, verläuft über dem Grundträger 8 parallel zur Förderrichtung ein Förderband 22. Dieses Förderband 22 ist über Umlenkrollen 23 und 24, eine Spannrolle 25 sowie eine Antriebsrolle 26 geführt. Die Antriebsrolle 26 wiederum steht über einen Riementrieb 27 mit einem Antriebsritzel 28 in Verbindung, das von einem Antriebsmotor 29 angetrieben wird.

Die Umlenkrollen 23 und 24 des Förderbandes 22 sind derart angeordnet, daß die Oberseite des Obertrumes des Förderbandes 22 präzise in der Förderebene E des Hauptförderers der anschließenden Bearbeitungsmaschine 2 liegt. Die Anordnung ist dabei derart getroffen, daß die Umlenkrolle 23 die Einlaufseite des Hauptförderers der Bearbeitungsmaschine 2 seitlich etwas überlappt, damit eine kontinuierliche Übergabe des Werkstückes W von dem Förderband 22 auf den Hauptförderer der Bearbeitungsmaschine 2 sichergestellt ist.

Aus der schematischen Darstellung in Figur 1 ist lediglich ein einziges Förderband 22 erkennbar. Wie aus Figur 3 hervorgeht, besitzt die Vorrichtung jedoch eine Anzahl von einander genau entsprechenden Förderbändern 22, die derart angeordnet sind, daß die Oberseite ihrer jeweiligen Obertrume in der Förderebene E liegen, die die Auflageebene der Vorrichtung 1 für die Werkstücke W bildet.

Die Anzahl der nebeneinanderliegenden Förderbänder 22 ist von der Breite der Vorrichtung abhängig. Der Abstand der Förderbänder 22 nimmt dabei - von der jeweils zu bearbeitenden Werkstückseitenkante aus gesehen - nach außen zu, so daß sowohl kurze als auch lange Werkstücke in jedem Fall für den Zuführvorgang zumindest an zwei Seiten abgeschützt sind.

Die auf der Oberseite des Grundträgers 8 angeordnete Anschlaganordnung 9 besteht aus einer der Anzahl der Förderbänder 22 entsprechenden Anzahl von Anschlagsätzen 30. Wie aus Figur 3 hervorgeht, sind diese Anschlagsätze 30 jeweils neben dem zugeordneten Förderband 22 angeordnet. Jeder Anschlagsatz 30 besteht aus einer Parallelogrammanordnung 31 (vgl. Fig. 2), die einen Ausleger 32 aufweist, der an seinem in Förderrichtung vorderen Ende einen Anschlag 33 trägt.

Die Parallelogrammanordnung 31 wird über einen diagonal eingesetzten Pneumatikzylinder 34 betätigt, mit dem der Anschlag 33 über die durch die Oberseite des Obertrumes der Förderbänder 22 gebildete Auflageebene E für die Werkstücke W, und damit in die Bewegungsbahn der Werkstücke W geschwenkt werden kann, wie dies in Figur 2 mit ausgezogenen Linien dargestellt ist. Mittels des Pneumatikzylinders 34 kann der Anschlag 33 ferner unter die Auflageebene E verschwenkt werden, wie dies in Figur 2 mit strichpunktierten Linien angedeutet ist.

Das in den Figuren dargestellt Ausführungsbeispiel der erfindungsgemäßen Vorrichtung 1 besitzt ferner jeweils mit einer Anzahl von Druckrollen 35 ausgestattete Druckbalken 36, die über Stellzylinder 37 auf- und abbewegbar sind.

Wie aus Figur 3 hervorgeht, sind die Druckrollen 35 der Druckbalken 36 leicht schräggestellt. Ferner ist im Bereich des linken Randes der Förderstrecke ein parallel zur Förderrichtung ausgerichtetes Anschlaglineal 38 vorgesehen. Dieses Anschlaglineal 38 liegt in der Auflageebene E der Werkstücke W und dient zum Ausrichten der Werkstücke hinsichtlich der Seitenlage.

Wie aus Figur 1 hervorgeht, ist die erfindungsgemäße Vorrichtung ferner auf der der Bearbeitungsmaschine 2 entgegengesetzten Einlaufseite für die Werkstücke W mit einem absenkbaren Halteanschlag 39 ausgestattet. Dieser Halteanschlag 39 ist im Endbereich einer Rollenbahn 40 vorgesehen, über die die Werkstücke W der Vorrichtung 1 zugeführt werden. Der Halteanschlag 39 ist im vorliegenden Fall als Anschlaglineal ausgebildet, das aus einer die Einlaufbewegung der Werkstücke W in die Vorrichtung stoppenden Sperrstellung (wie in Fig. 1 dargestellt) in eine den Einlauf der Werkstücke freigebende abgesenkte Stellung (nicht dargestellt) verfahrbar ist.

Das dargestellte Ausführungsbeispiel der erfindungsgemäßen Vorrichtung 1 zum Zuführen von Werkstücken zur Bearbeitungsmaschine 2 arbeitet wie folgt:
Die über die Rollenbahn 40 angelieferten Werkstücke W werden durch den Halteanschlag 39 derart separiert, daß die Werkstücke in einem vorgegebenen Abstand zueinander in die Vorrichtung 1 einlaufen.

Der Abstand ist dabei in der Weise vorgegeben, daß die Bearbeitungsmaschine 2 optimal arbeiten, d.h. mit einer optimalen Maschinenausnützung und damit mit voller Arbeitsleistung gefahren werden kann.

Ist die Vorrichtung 1 zur Aufnahme eines neuen Werkstücks bereit, so wird der Anschlag 39 abgesenkt, so daß das Werkstück W über die Rollenbahn 40 in die Vorrichtung 1 einlaufen kann. Beim Einlaufvorgang gerät das Werkstück W zwischen das Förderband 22 und die Druckrollen 35 des ersten Druckbalkens 36.

Da die Druckrollen 35 leicht schräggestellt sind, erfährt das Werkstück W während seiner Durchlaufbewegung in Richtung der Bearbeitungsmaschine 2 quer zur Förderrichtung eine Seitenbewegung, bis es mit seiner für die Bearbeitung vorgesehenen Kante an dem Anschlaglineal 38 zur Anlage gelangt. Die leicht schräggestellten Druckrollen 35 sorgen im weiteren Verlauf des Durchlaufvorganges dafür, daß die Werkstücke W bis zur Übergabe an die Bearbeitungsmaschine 2 mit ihrer für die Bearbeitung vorgesehenen Kante an dem Anschlaglineal 38 in Anlage gehalten werden.

Während des Einlaufvorganges des Werkstückes unter den ersten Druckbalken 36 wird der Grundträger 8 auf den Geradführungen 4 und 5 mittels des Antriebsmotores 21 in die in Figur 1 gezeigte Stellung zurückgefahren. Bei diesem Rückfahrvorgang sind die Anschläge 33 durch Ausfahren der Pneumatikzylinder 34 unter die Auflageebene E für die Werkstücke W abgesenkt. Hat das jeweilige Werkstück dann die Anschläge 33 mit seiner Hinterkante überfahren, werden die Pneumatikzylinder 34 erneut betätigt und die Anschläge 33 über die Auflageebene E ausgefahren.

Über den Antriebsmotor 21 wird dann der Grundträger 8 dem sich weiter auf den Förderbändern 22 in Richtung der Bearbeitungsmaschine 2 fortbewegenden Werkstück nachgeführt, bis die Anschläge 33 an der Hinterkante des jeweiligen Werkstückes W zur Anlage gelangen. Die Anschläge 30 dienen dabei als Ausrichtmittel, mit dem die Werkstücke winkelgerecht ausgerichtet werden.

Erfindungsgemäß werden die Werkstücke im weiteren Verlauf ihrer Bewegung durch die Vorrichtung, d.h. bei ihrem Transport über die Förderstrecke über die Anschläge 33 mit einer derartigen Geschwindigkeit bewegt, daß sie im Moment der Übergabe an den Hauptförderer der Bearbeitungsmaschine 2 den oben erwähnten optimalen Abstand gegenüber der Hinterkante des bereits übergebenen letzten Werkstückes aufweisen. Dabei kann es erforderlich sein, daß die Werkstücke W zur Bildung dieses Abstandes und damit einer optimalen Lücke bei ihrem Weg über die Förderstrecke beschleunigt oder auch verzögert werden. Wesentlich ist lediglich, daß sie zum Zeitpunkt der Übergabe die Geschwindigkeit des Hauptförderers der Bearbeitungsmaschine 2 aufweisen und ihre Lage derart gesteuert ist, daß sie mit ihrer Vorderkante den bereits erwähnten optimalen Abstand aufweisen.

In dem in den Figuren dargestellten Ausführungsbeispiel haben die Anschläge 33 der Anschlagssätze 30 eine Doppelfunktion. Zum einen sind sie Bestandteil der Fördereinrichtung, mit der die Werkstücke über die Förderstrecke bis zur Übergabe an den mit konstanter Geschwindigkeit arbeitenden Hauptförderer der Bearbeitungsmaschine 2 bewegt werden, zum anderen dienen sie als Ausrichtmittel, über die die Werkstücke bei ihrem Weg über die Förderstreche bis zur Übergabe winkelgerecht ausgerichtet werden.

Neben den Anschlägen 33 sind beim vorliegenden Ausführungsbeispiel Bestandteil der Fördereinrichtung die Parallelogrammanordnung 31 einschließlich Grundträger 8 und aller Antriebsmittel bis zum Antriebsmotor 21. Der Antriebsmotor 21 einschließlich Antriebszahnrad 20, Umlenkzahnrad 19 und Zahnriemen bildet dabei den Antrieb der Fördereinrichtung.

Bestandteil der Fördereinrichtung sind im vorliegenden Ausführungsbeispiel auch die Förderbänder 22 mit ihren Antriebsmitteln bis zum Antriebsmotor 29. Die Förderbänder 22 werden allerdings mit einer geringeren Geschwindigkeit fortbewegt als die Anschläge 33. Auf diese Weise werden die Werkstücke W während des Fördervorganges an den Anschlägen 33 in Anlage gehalten, und damit bei ihrem Weg über die Förderstrecke stabilisiert. Die Förderbänder 22 bilden somit nicht nur die Auflageebene oder Förderebene für die Werkstücke, sondern stellen auch die im Patentanspruch 9 erwähnten zusätzlichen Elemente dar, mit denen die Werkstücke während des Fördervorganges an den Anschlägen in Anlage gehalten werden. Diesbezüglich haben die Förderbänder 22 bei dem in den Figuren dargestellten Ausführungsbeispiel eine Doppelfunktion.

Um die Werkstücke bei ihrer Bewegung über die Förderstrecke insbesondere bei hochdynamischem Betrieb zu stabilisieren, kann es vorteilhaft sein, zusätzlich zu den beschriebenen Mitteln noch Anschlageinrichtungen vorzusehen, die kurz vor der Übergabe des Werkstückes an den Hauptförderer der Bearbeitungsmaschine 2 zum Einsatz kommen. Diese Anschlageinrichtungen können beispielsweise Gegenanschläge sein, die an der in Förderrichtung vorderen Kante des jeweiligen Werkstückes angreifen, und das Werkstück somit zusammen mit den Anschlägen 33 bei der Übergabe an beiden Seiten zumindest über eine bestimmte Wegstrecke des Förderweges fest eingespannt halten.

Für besondere Anwendungsfälle kann es auch zweckmäßig sein, die Anschläge 33 nicht an der in Förderrichtung hinteren Kante, sondern vielmehr an der in Förderrichtung vorderen Kante der Werkstücke zur Anlage zu bringen. In einem solchen Fall ist es erforderlich, daß die Förderbänder 22 zumindest zeitweise eine höhere Geschwindigkeit aufweisen als die Anschläge, damit die Werkstücke während des Fördervorganges in Anlage an den Anschlägen gehalten werden.

## Patentansprüche

1. Vorrichtung zum Zuführen von Werkstücken zu einer kontinuierlich im Durchlauf arbeitenden Bearbeitungsmaschine (2), insbesondere Kantenbearbeitungsmaschine,
- mit einer Antriebsmittel aufweisenden Fördereinrichtung, mit der die Werkstücke (W) über eine Förderstrecke zu einem Hauptförderer der Bearbeitungsmaschine bewegbar sind,
- mit Ausrichtmitteln, über die die Werkstücke bei ihrem Weg über die Förderstrecke bis zur Übergabe winkelgerecht und hinsichtlich ihrer Seitenlage präzise ausgerichtet werden, wobei
- die Ausrichtmittel von mindestens zwei Anschlägen (33) gebildet sind, die zur Anlage an der in Durchlaufrichtung vorderen oder hinteren Kante des jeweiligen Werkstückes (W) eingerichtet sind, und
- am Werkstück (W) angreifende zusätzliche Elemente vorgesehen sind, die die Werkstücke während des Fördervorganges nachgiebig an den Anschlägen (33) in Anlage halten,
**dadurch gekennzeichnet, daß**
- die Anschläge (33) über die Antriebsmittel mit einer für jedes Werkstück individuell einstellbaren, im Bedarfsfalle Beschleunigungs- und /oder Verzögerungsvorgänge umfassenden Geschwindigkeit entlang der Förderstrecke bewegbar sind.

2. Vorrichtung nach Anspruch 1,
**dadurch gekennzeichnet, daß**
die Antriebsmittel einen vom Antrieb des Hauptförderers unabhängigen Antrieb aufweisen.

3. Vorrichtung nach Anspruch 2,
**dadurch gekennzeichnet, daß**
der Antrieb ein elektromotorischer Antrieb ist.

4. Vorrichtung nach Anspruch 2,
**dadurch gekennzeichnet, daß**
der Antrieb ein pneumatischer oder hydraulischer Antrieb ist.

5. Vorrichtung nach Anspruch 1,
**dadurch gekennzeichnet, daß**
die am Werkstück angreifenden zusätzlichen Elemente jeweils auf der Unterseite der Werkstücke (W) angreifende Bänder (22) oder Rollen sind, die ein in Richtung auf die Anschläge (33) gerichtete Kraft auf die Werkstücke ausüben.

6. Vorrichtung nach Anspruch 1,
**dadurch gekennzeichnet, daß**
die am Werkstück angreifenden zusätzlichen Elemente jeweils auf der Oberseite der Werkstücke angreifende Bänder oder Rollen sind, die eine in Richtung auf die Anschläge (33) gerichtete Kraft auf die Werkstücke ausüben.

7. Vorrichtung nach Anspruch 1,
**dadurch gekennzeichnet, daß**
die am Werkstück angreifenden zusätzlichen Elemente auf der den Anschlägen entgegengesetzten Werkstückkante auf die Werkstücke (W) einwirken und eine in Richtung der Anschläge gerichtete Kraft auf die Werkstücke ausüben.

8. Vorrichtung nach Anspruch 1,
**dadurch gekennzeichnet, daß**
zum Ausrichten hinsichtlich der Seitenlage im Randbereich der Förderstrecke ein parallel zur Förderrichtung ausgerichtetes Anschlaglineal (38) vorgesehen ist, und daß quer zur Förderrichtung wirksame Ausrichtmittel vorgesehen sind, die die Werkstücke mit der für die Bearbeitung vorgesehenen Kante an dem Anschlaglineal zur Anlage bewegen und an diesem nachgiebig in Anlage halten.

9. Vorrichtung nach Anspruch 8,
**dadurch gekennzeichnet, daß**
die quer zur Förderrichtung wirksamen Ausrichtmittel schräg gestellte Rollen (35) oder Bänder sind.

10. Vorrichtung nach Anspruch 1,
**dadurch gekennzeichnet, daß**
die Anschläge (33) auf einem sich quer zur Förderrichtung und unterhalb der Förderstrecke erstreckenden Grundträger (8) befestigt sind, der auf einer Führung in Förderrichtung hin- und herverfahrbar gelagert ist.

11. Vorrichtung nach Anspruch 10,
**dadurch gekennzeichnet, daß**
die Führung aus mindestens zwei im Abstand und parallel zueinander in Förderrichtung verlaufenden Geradführungen (4, 5) besteht.

12. Vorrichtung nach Anspruch 10 oder 11,
**dadurch gekennzeichnet, daß**
der Grundträger (8) mit einer Synchronlaufeinrichtung (10) ausgestattet ist.

13. Vorrichtung nach Anspruch 11 und 12,
**dadurch gekennzeichnet, daß**
die Synchronlaufeinrichtung (10) aus zwei im Abstand zueinander angeordneten, vorzugsweise an den Geradführungen (4, 5) befestigten Zahnstangen (11, 12) besteht, in die jeweils Zahnräder (13, 14) eingreifen, welche über eine an dem Grundträger (8) gelagerte Verbindungswelle (15) drehfest miteinander gekoppelt sind.

14. Vorrichtung nach Anspruch 2, 3 oder 4 sowie 10 bis 13,
**dadurch gekennzeichnet, daß**
der Grundträger (8) über den Antrieb entlang der Führungen (4, 5) hin- und herverfahrbar ist.

15. Vorrichtung nach Anspruch 14,
**dadurch gekennzeichnet, daß**
der Antrieb über einen Zahnriemen (18) an dem Grundträger (8) angekoppelt ist.

16. Vorrichtung nach Anspruch 10 oder 11,
**dadurch gekennzeichnet, daß**
die Anschläge (33) unter die Auflageebene (E) der Werkstücke (W) absenkbar sind.

17. Vorrichtung nach Anspruch 5 und 16,
**dadurch gekennzeichnet, daß**
die Auflageebene (E) der Werkstücke (W) von den an der Unterseite der Werkstücke angreifenden Bändern (22) oder Rollen gebildet ist.

18. Vorrichtung nach Anspruch 1 sowie 10 oder 11,
**dadurch gekennzeichnet, daß**
die Anschläge (33) über Pneumatikzylinder (34) ausfahrbar und absenkbar sind.

19. Vorrichtung nach einem oder mehreren der vorhergehenden Ansprüche 1 bis 18,
**dadurch gekennzeichnet, daß**
auf der der Bearbeitungsmaschine (2) gegenüberliegenden Einlaufseite der Vorrichtung (1) ein Halteanschlag (39) für die Werkstücke (W) vorgesehen ist.

20. Vorrichtung nach Anspruch 19,
**dadurch gekennzeichnet, daß**
der Halteanschlag (39) als Anschlaglineal ausgebildet ist.

21. Vorrichtung nach Anspruch 19 oder 20,
**dadurch gekennzeichnet, daß**
der Halteanschlag (39) aus einer die Einlaufbewegung der Werkstücke (W) stoppenden Sperrstellung in eine den Einlauf der Werkstücke freigebende abgesenkte Stellung verfahrbar ist.

## Claims

1. Device for feeding workpieces to a processing machine (2), especially edge processing machine, operating with continuous throughput
- having a conveyor device comprising a drive means, by which the workpieces (W) can be moved via a conveying track to a main conveyor of the processing machine,
- having aligning means through which the workpieces in their path through the conveying track up to handover are aligned precisely at the correct angle and with regard to their lateral position,
- the aligning means being formed from at least two limit stops (33) which are set up to rest against the forward or rearward edge of the respective workpiece (W) in the direction of passage, and
- engaging on the workpiece (W) additional elements are provided which hold the workpieces flexibly in position against the limit stops (33) during the conveying process,
characterised in that
- through the driving means, the limit stops (33) can be moved along the conveying track at a speed which can be adjusted individually for each workpiece, comprising if need be acceleration and/or retardation processes.

2. Device according to Claim 1, characterised in that the driving means comprise a drive which is independent of the drive of the main conveyor.

3. Device according to Claim 2, characterised in that the drive is an electric motor drive.

4. Device according to Claim 2, characterised in that the drive is a pneumatic or hydraulic drive.

5. Device according to Claim 1, characterised in that the additional elements engaging on the workpiece are each belts (22) or rollers which engage on the underside of the workpieces (W) and exercise a force on the workpieces aligned in the direction towards the limit stops (33).

6. Device according to Claim 1, characterised in that the additional elements engaging on the workpiece are each belts or rollers which engage on the upper side of the workpieces and exercise a force on the workpieces aligned in the direction towards the limit stops (33).

7. Device according to Claim 1, characterised in that the additional elements engaging on the workpiece act on the workpieces (W) on the workpiece edge opposite the limit stops and exercise a force on the workpieces aligned in the direction of the limit stops.

8. Device according to Claim 1, characterised in that for aligning with respect to the lateral position in the peripheral region of the conveying track a limiting straightedge (38) aligned parallel to the direction of transport is provided, and that, acting transversely to the direction of transport, aligning means are provided which move the workpieces by the edge intended for processing to rest against the limiting straightedge and hold them flexibly in position against the latter.

9. Device according to Claim 8, characterised in that the aligning means acting transversely to the direction of transport are obliquely positioned rollers (35) or belts.

10. Device according to Claim 1, characterised in that the limit stops (33) are fastened to a base support (8), extending transversely to the direction of transport and beneath the conveying track, which is mounted on a guide so that it can be slid back and forth in the direction of transport.

11. Device according to Claim 10, characterised in that the guide consists of at least two slide bars (4, 5) extending in the direction of transport at a distance from and parallel to one another.

12. Device according to Claim 10 or 11, characterised in that the base support (8) is equipped with a synchronous running device (10).

13. Device according to Claim 11 and 12, characterised in that the synchronous running device (10) consists of two gear racks (11, 12) which are arranged at a distance to one another, preferably fastened to the slide bars (4, 5), and in each of which gear wheels (13, 14) engage which are connected to one another in non-rotatable manner through a connecting shaft (15) mounted on the base support (8).

14. Device according to Claim 2, 3 or 4 as well as 10 to 13, characterised in that the base support (8) can be slid back and forth along the guides (4, 5) through the drive.

15. Device according to Claim 14, characterised in that the drive is coupled to the base support (8) through a gear belt (18).

16. Device according to Claim 10 or 11, characterised in that the limit stops (33) can be lowered below the support plane (E) of the workpieces (W).

17. Device according to Claim 5 and 16, characterised in that the support plane (E) of the workpieces (W) is formed from the belts (22) or rollers in contact with the underside of the of the workpieces.

18. Device according to Claim 1 as well as 10 or 11, characterised in that the limit stops (33) can be moved out and lowered through pneumatic cylinders (34).

19. Device according to one or several of the preceding Claims 1 to 18, characterised in that on the infeed side of the device (1) opposite the processing machine (2), a retaining stop (39) for the workpieces (W) is provided.

20. Device according to Claim 19, characterised in that the retaining stop (39) is constructed as a limiting straightedge.

21. Device according to Claim 19 or 20, characterised in that the retaining stop (39) is movable from a blocking position stopping the infeed movement of the workpieces (W) into a lowered position releasing the inflow of the workpieces

## Revendications

1. Dispositif pour alimenter en pièces une machine d'usinage (2) travaillant en continu, en défilement, en particulier une machine d'usinage des bords,
- comportant un dispositif de transport présentant des moyens d'entraînement, par lequel les pièces (W) peuvent être déplacées sur un parcours de transport vers un convoyeur principal de la machine d'usinage,
- comportant des moyens d'alignement par lesquels, pendant son déplacement sur le parcours de transport jusqu'au transfert, la pièce peut être orientée avec précision dans son inclinaison et sa position latérale, tandis que
- les moyens d'alignement sont formés par au moins deux butées (33) qui sont disposées en vue de venir se placer contre le bord de chaque pièce (W), qui se trouve en avant ou en arrière dans la direction de défilement, et que
- des éléments supplémentaires agissant sur la pièce (W) sont prévus pour maintenir la pièce de manière élastique contre les butées (33) pendant l'opération de transport,
caractérisé en ce que
- les butées (33) peuvent être déplacées par les moyens d'entraînement le long du parcours de transport, à une vitesse qui peut être ajustée individuellement pour chaque pièce, comprenant en cas de besoin des opérations d'accélération et/ou de ralentissement.

2. Dispositif selon la revendication 1, caractérisé en ce que les moyens d'entraînement présentent un entraînement indépendant de l'entraînement du convoyeur principal.

3. Dispositif selon la revendication 2, caractérisé en ce que l'entraînement est un entraînement par moteur électrique.

4. Dispositif selon la revendication 2, caractérisé en ce que l'entraînement est un entraînement pneumatique ou hydraulique.

5. Dispositif selon la revendication 1, caractérisé en ce que les éléments supplémentaires agissant sur la pièce sont des bandes (22) ou des rouleaux qui agissent chaque fois sur le côté inférieur de la pièce (W), et qui exercent sur la pièce une force dirigée vers les butées (33).

6. Dispositif selon la revendication 1, caractérisé en ce que les éléments supplémentaires agissant sur la pièce sont des bandes ou des rouleaux agissant chaque fois sur le côté supérieur de la pièce, et qui exercent sur la pièce une force dirigée vers les butées (33).

7. Dispositif selon la revendication 1, caractérisé en ce que les éléments supplémentaires agissant sur la pièce agissent sur la pièce (W) par le bord de la pièce situé du côté opposé aux butées, et exercent sur la pièce une force dirigée vers les butées.

8. Dispositif selon la revendication 1, caractérisé en ce que, pour l'alignement en position latérale dans la région du bord du parcours de transport, il est prévu une règle de butée (38) orientée parallèlement à la direction de transport, et en ce qu'il est prévu des moyens d'alignement agissant transversalement par rapport à la direction de transport, qui amènent la pièce en position contre la règle de butée, avec le bord prévu pour l'usinage, et qui maintiennent ce bord de manière élastique en position.

9. Dispositif selon la revendication 8, caractérisé en ce que les moyens d'alignement agissant transversalement par rapport à la direction de transport sont des rouleaux (35) ou bandes disposés obliquement.

10. Dispositif selon la revendication 1, caractérisé en ce que les butées (33) sont fixées sur un support de base (8) s'étendant transversalement par rapport à la direction de transport et situé en dessous du parcours de transport, qui est monté sur un guide de manière à pouvoir se déplacer en va-et-vient dans la direction de transport.

11. Dispositif selon la revendication 10, caractérisé en ce que le guide est constitué d'au moins deux guides rectilignes (4, 5) s'étendant à distance mutuelle et parallèles l'un à l'autre dans la direction de transport.

12. Dispositif selon la revendication 10 ou 11, caractérisé en ce que le support de base (8) est équipé d'un dispositif (10) d'avancement synchronisé.

13. Dispositif selon les revendications 11 et 12, caractérisé en ce que le dispositif (10) d'avancement synchronisé est constitué de deux crémaillères (11, 12) disposées à distance l'une de l'autre et fixées de préférence sur les guides rectilignes (4, 5), dans lesquelles s'engagent des roues dentées (13, 14) qui sont couplées l'une à l'autre rotation solidaire par l'intermédiaire d'un arbre de liaison (15) monté sur le support de base (8).

14. Dispositif selon les revendications 2, 3 ou 4 et 10 à 13, caractérisé en ce que le support de base (8) peut être déplacé en va-et-vient le long des guides (4, 5) par l'intermédiaire de l'entraînement.

15. Dispositif selon la revendication 14, caractérisé en ce que l'entraînement est accouplé au support de base (8) par l'intermédiaire d une courroie crantée (18).

16. Dispositif selon la revendication 10 ou 11, caractérisé en ce que les butées (33) peuvent être abaissées en dessous du plan de pose (E) de la pièce (W).

17. Dispositif selon les revendications 5 et 16, caractérisé en ce que le plan de pose (E) de la pièce (W) est formé par les bandes (22) ou rouleaux agissant sur le côté inférieur de la pièce.

18. Dispositif selon la revendication 1 ainsi que la revendication 10 ou 11, caractérisé en ce que les butées (33) peuvent être sorties et escamotées par l'intermédiaire de cylindres pneumatiques (34).

19. Dispositif selon l'un ou plusieurs des revendications 1 à 18 ci-dessus, caractérisé en ce qu'une butée de maintien (39) pour la pièce (W) est prévue du côté d'introduction du dispositif (1), opposé à la machine d'usinage (2).

20. Dispositif selon la revendication 19, caractérisé en ce que la butée de maintien (39) est configurée comme règle de butée.

21. Dispositif selon la revendication 19 ou 20, caractérisé en ce que la butée de maintien (39) peut être déplacée depuis une position de blocage qui arrête le déplacement d'entrée de la pièce (W), jusque dans une position abaissée libérant l'entrée de la pièce.
